(19) **Europäisches Patentamt**
**European Patent Office**
**Office européen des brevets**

(11) Veröffentlichungsnummer: **0 007 111**
A2

(12) # EUROPÄISCHE PATENTANMELDUNG

(21) Anmeldenummer: **79102480.5**

(22) Anmeldetag: **16.07.79**

(51) Int. Cl.³: **G 01 F 1/32** .

(30) Priorität: **19.07.78 DE 2831823**

(43) Veröffentlichungstag der Anmeldung:
**23.01.80 Patentblatt 80/2**

(84) Benannte Vertragsstaaten:
**DE FR GB**

(71) Anmelder: **SIEMENS AKTIENGESELLSCHAFT Berlin und München**
**Postfach 261**
**D-8000 München 22(DE)**

(72) Erfinder: **Klobe, Martin**
**August-Bebel-Strasse 87**
**D-7500 Karlsruhe(DE)**

(54) Strömungsmesseinrichtung nach dem Prinzip der Kármán'schen Wirbelstrasse.

(57) Strömungsmeßeinrichtung mit einem innerhalb eines Rohrabschnitts angeordneten, wirbelerzeugenden Staukörper, der aus einem voderen, prismatischen Teil und einem an diesen anschließenden quaderförmigen Fortsatz besteht. Im Innern des prismatischen Teils sind zwei parallele Druckkammern quer zur Strömungsrichtung angeordnet, die über Reihen von Öffnungen bzw. über Schlitze mit der Rückseite des prismatischen Teils ober- und unterhalb des Fortsatzes verbunden sind und eine pneumatische R-C-Kombination bilden. Druckaufnehmer zur Messung der durch die Wirbelablösungen entstehenden, der Strömungsgeschwindigkeit proportionalen periodischen Druckschwankungen sind in oder in druckleitender Verbindung mit den Druckkammern angeordnet.

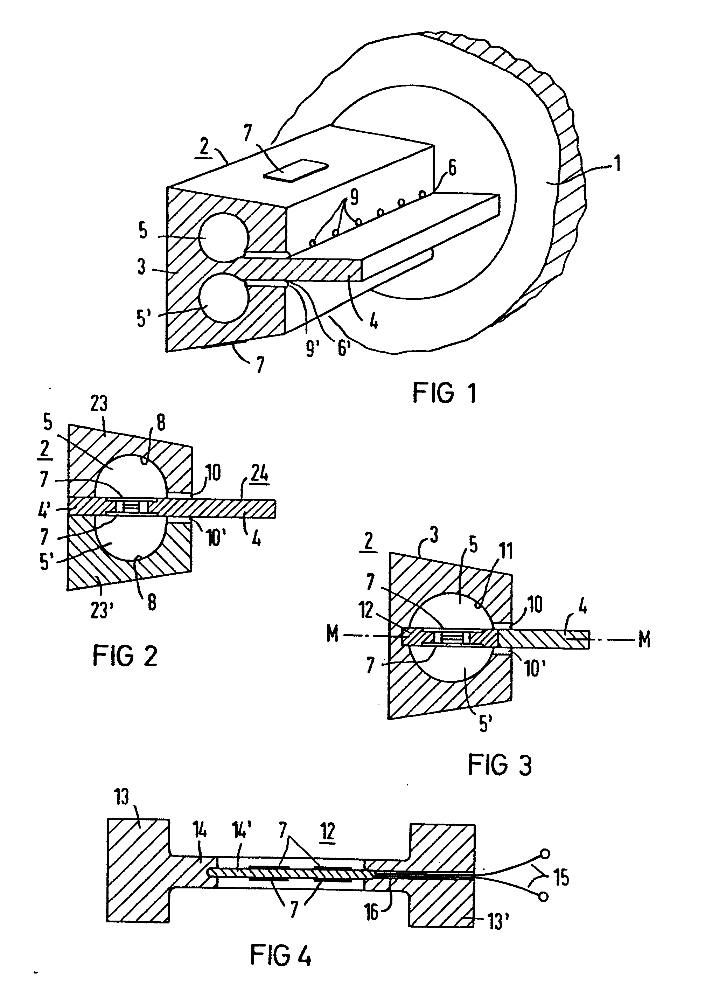

Mittels der R-C-Kombination Wird die Gleichphasigkeit der Wirbelablösungen über die Breite des Staukörpers verbessert und das Fading verringert. (Figur 1)

FIG 1

SIEMENS AKTIENGESELLSCHAFT     Unser Zeichen:

Berlin und München           VPA 78 P 3 5 1 9 BRD R

Strömungsmeßeinrichtung nach dem Prinzip der Kármán'schen Wirbelstraße

Die Erfindung bezieht sich auf eine Strömungsmeßeinrichtung nach dem Prinzip der Kármán'schen Wirbelstraße mit einem innerhalb eines Rohrabschnitts angeordneten wirbelerzeugenden Staukörper, der aus einem vorderen, mit einer seiner Parallelflächen entgegen der Strömungsrichtung angeordneten prismatischen Teil und einem an die rückwärtige Parallelfläche anschließenden, im wesentlichen quaderförmigen und sich in Strömungsrichtung erstreckenden Fortsatz besteht, sowie mit Mitteln zur Messung der durch die Wirbelablösung entstehenden, der Strömungsgeschwindigkeit proportionalen Frequenz von periodischen Druckschwankungen.

Derartige Meßeinrichtungen sind beispielsweise aus der US-PS 3 972 232 bekannt. Dort ist ein Staukörper dargestellt, der sich T-förmig aus einem relativ schmalen prismatischen Vorderteil mit trapezförmigem Querschnitt und einem anschließenden quaderförmigen Teil relativ

Sp 4 Scl / 28.06.1978

großer Dicke zusammensetzt. Die Mittel zur Messung der Druckschwankungen, hier piezoelektrische Aufnehmer, sind in dem quaderförmigen Teil angeordnet, derart, daß die druckempfindlichen Flächen in der strömungsparallelen oberen und unteren Seitenfläche des quaderförmigen Teils angebracht sind.

Betrachtet man die Phasenlage der Wirbel längs des Staukörpers, so kann mit einer Gleichphasigkeit der periodischen Bewegung längs des Staukörpers nicht gerechnet werden. Die Zähigkeit eines jeden strömenden Fluids sorgt zwar durch einen Mitnehmereffekt dafür, daß es zwischen benachbarten Wirbelelementen nur zu äußerst geringen Phasenverschiebungen kommt, bei größerer Länge des Staukörpers können jedoch merkliche Phasenverschiebungen auftreten; dadurch werden Ausgleichsströmungen parallel zur Staukörperachse verursacht, die zu Störungen der periodischen Wirbelablösung und damit zu Fading bis zum zeitweiligen Schwund der Wirbeleffekte führen können. Fehlmessungen sind die Folge.

Es besteht demgemäß die Aufgabe, einen Staukörper zu schaffen, bei dem die Gleichphasigkeit der Wirbelablösungen über die ganze Kantenlänge gewährleistet ist und bei dem der Anbringungsort des oder der vorzugsweise als Druckaufnehmer ausgebildeten Mittel zur Messung der periodischen Druckschwankungen unkritisch ist.

Eine Lösung der Aufgabe wird in einer Strömungsmeßeinrichtung der eingangs genannten Art gesehen, die dadurch gekennzeichnet ist, daß im Innern des prismatischen Teils des Staukörpers zwei sich über dessen wirksame Länge quer zur Strömungsrichtung erstreckende Druckkammern angebracht sind und daß entlang der Winkelkanten, die von den senkrecht zur Strömungsrichtung verlaufenden rückwärtigen Teilflächen des prismatischen Teils und den strömungsparallel verlaufenden Flächen des quaderförmigen Fortsatzes gebildet werden, Öffnungen angebracht sind, die druckleitend mit jeweils einer Druckkammer verbunden sind und daß die Druckaufnehmer in oder in hydraulischer Verbindung mit den Druckkammern angeordnet sind.

In einer bevorzugten Ausführungsform sind die Öffnungen als Schlitze ausgebildet, die sich entlang der Winkelkante oberhalb und unterhalb des Fortsatzes erstrecken und über ihre ganze Länge mit jeweils einer Druckkammer in Verbindung stehen.

Die Öffnungen sind vorzugsweise entlang der inneren Winkelkanten angebracht, an welchen ausgeprägte Druckschwankungen infolge der Wirbelbildung an den Staukörperkanten auftreten.

Die Druckkammern sind als hydraulische Kapazitäten anzusehen, in denen in der Längsachse kein Druckgefälle auftritt. Über die als hydraulische Widerstände wirkenden Öffnungen bzw. Schlitze stehen sie mit dem strömenden Medium in Verbindung und sind durch Aufnahme und Abgabe von Strömungsmittelteilchen mit dem periodischen Strömungsvorgang gekoppelt. Druckkammern und Öffnungen bilden jeweils ein hydraulisches RC-Glied, die durch die Kopplung erzielte Rückwirkung hat längs des Staukörpers die gleiche Phase, damit wird die Gleichphasigkeit der Wirbelvorgänge längs der Staukörperachse verbessert und das Fading oder der Schwund der Wirbeleffekte verhindert. Bei inkompressiblen Fluiden wird die Wirkung verbessert, wenn zumindest ein Teil der die beiden Kammern trennenden Wand als etwa senkrecht zur Trennebene bewegliche Wand, z. B. als Membran ausgebildet ist.

Die das Fading der Wirbeleffekte unterdrückende Wirkung der Druckkammern mit ihren Öffnungen wirkt sich günstig auf das Ausgangssignal aus, unabhängig von der Art des verwendeten Meßwertaufnehmers und unabhängig vom Ort seiner Anbringung. Meßwertaufnehmer, die als Druckaufnehmer ausgebildet sind, können auf oder in den Außenflächen des Staukörpers mit Ausnahme der angeströmten Vorderfläche, in den Druckkammern oder über kurze Leitungen mit diesen verbunden, außerhalb des Staukörpers angebracht werden. In einer bevorzugten Ausführungsform sind sie auf einer herausnehmbaren Trennwand zwischen den beiden Druckkammern angeordnet, wodurch sie vor Verschmutzung und vor Angriffen durch die Strömung geschützt und leicht auswechselbar sind.

Weitere Merkmale und Vorteile der erfindungsgemäßen Strömungsmeßeinrichtung ergeben sich aus den Unteransprüchen in Verbindung mit den in den Figuren 1 bis 4 dargestellten Ausführungsbeispielen, die im folgenden beschrieben werden.

Figur 1: In der Wand eines Rohrabschnittes 1 ist der sich quer zur Strömungsrichtung erstreckende, wirbelerzeugende Staukörper 2 einer Strömungsmeßeinrichtung nach dem Prinzip der Kármán'schen Wirbelstraße angebracht. Der Staukörper 2 besteht aus einem vorderen, mit seiner größeren Parallelfläche entgegen der Strömungsrichtung (Pfeil) angeordneten prismatischen Teil 3 mit trapezförmigem Querschnitt und einem, an die kleinere rückwärtige Parallelfläche anschließenden, im wesentlichen quaderförmigen, sich in Strömungsrichtung erstreckenden Fortsatz 4.

Im Innern des prismatischen Teils 3 des Staukörpers 2 sind über dessen wirksame Länge zwei parallel verlaufende Druckkammern 5, 5' angebracht. Entlang der Winkelkanten 6 und 6', die von den senkrecht zur Strömungsrichtung verlaufenden rückwärtigen Teilflächen des prismatischen Teils 3 und den strömungsparallel verlaufenden Flächen des quaderförmigen Fortsatzes 4 gebildet werden, verlaufen jeweils eine Reihe von gleichartigen Bohrungen 9, 9', die mit den Druckkammern 5 bzw. 5' in Verbindung stehen und mit diesen eine hydraulische Widerstands-Kapazitäts-Kombination bilden.

Die durch periodischen Strömungsabriß an den Kanten des Staukörpers 2 entstehenden Wirbel erzeugen Druckschwankungen, zu deren Umwandlung in ein strömungsproportionales elektrisches Signal auf den geneigten Außenflächen des prismatischen Teils 3 angeordnete Druckaufnehmer 7 vorgesehen sind. Sie stehen in hydraulischer Verbindung mit der die Gleichphasigkeit der Wirbelablösung bewirkenden Widerstands-Kapazitäts-Kombination. Die Druckaufnehmer können auch in hier nicht näher dargestellter Weise gut zugänglich außerhalb des Rohrabschnittes 1 angebracht und mit den Druckkammern 5, 5' durch Leitungen niederen Widerstands verbunden werden.

Der in Figur 2 dargestellte Staukörper 2 ist aus drei Formteilen zusammengesetzt, nämlich einer quaderförmigen Platte 24, deren rückwärtiger Teil den Fortsatz 4 des Staukörpers 2 bildet und in deren vorderen Teil 4' die Druckaufnehmer 7 angeordnet sind, die z. B. in bekannter Weise als kapazitive Wandler ausgebildet sein können, bei denen die in den Oberflächen des Vorderteils 4' angebrachten druckempfindlichen Membranen die beweglichen Elektroden von Kondensatoren bzw. von einem Differentialkondensator mit festen Mittelelektroden bilden. Der prismatische Teil setzt sich aus zwei gleichartigen Teilstücken 23 und 23' zusammen, die mit Rinnen 8 versehen sind, welche nach symmetrischem Aufsetzen der Teile 23 und 23' auf den vorderen Teil 4' der quaderförmigen Platte 24 mit dessen Oberfläche die Druckkammern 5 und 5' bilden. Die rückwärtigen Kanten der Teile 23 und 23' liegen nicht auf der quaderförmigen Platte 24 auf, so daß Schlitze 10 und 10' entstehen, die durchgehend entlang der Winkelkante zu den Druckkammern 5 und 5' führen.

In einer in <u>Figur 3</u> dargestellten weiteren Ausführungsform weist der prismatische Teil 3 einen vorzugsweise zylindrischen Hohlraum 11 auf, dessen Achse in der Mittelebene M - M des Staukörpers 2 liegt und der durch eine sich in dieser Mittelebene erstreckende Trennwand 12 in zwei gleiche Druckkammern 5 und 5' unterteilt ist. Die Druckkammern 5 und 5' stehen auch hier wie bei der Ausführung nach Figur 2 über Schlitze 10, 10' mit dem Strömungsmedium in Verbindung.
Die Trennwand 12 ist gleichzeitig als Träger für die Druckaufnehmer 7 ausgebildet und läßt sich von einer Stirnfläche des Hohlraumes 11 her in diesen einschieben.

<u>Figur 4</u> zeigt einen Längsschnitt durch eine Trennwand 12, die beiden Endstücke 13 und 13' sind zylindrisch und von solchem Durchmesser, daß sie mit Dichtsitz in den zylindrischen Hohlraum 11 von außen her einschiebbar sind. Zwischen den zylindrischen Endstücken 13 und 13' befindet sich das Mittelstück 14 der Trennwand 12, das zwei zur Mittelebene parallele Flächen aufweist, in welchen die Druckaufnehmer 7, beispielsweise piezoresistive Wandler, angeordnet sind. Das Mittelstück 14 kann auch, wie dargestellt, zum Teil als bewegliche Wand 14' in Form einer Membran ausgebildet sein, was insbesondere bei der Strömungsmessung nichtkompressibler Flüssigkeiten von Vorteil ist.
Die das elektrische Signal führenden Signalleitungen 15 der Druckaufnehmer 7 sind über eine axiale Bohrung 16 in der Trennwand 12 nach außen geführt.

Mit den Ausführungsformen nach Figur 3 und 4 läßt sich ein System aufbauen mit Staukörpern verschiedener Form und Länge, aber mit gleichartigem Innenaufbau mit auswechselbarem Träger für Druckaufnehmer verschiedener Art.

Patentansprüche

1. Strömungsmeßeinrichtung nach dem Prinzip der Kármán'-schen Wirbelstraße mit einem innerhalb eines Rohrabschnitts angeordneten wirbelerzeugenden Staukörper, der aus einem vorderen, mit einer seiner Parallelflächen entgegen der Strömungsrichtung angeordneten prismatischen Teil mit vorzugsweise trapezförmigem Querschnitt und einem, an die rückwärtige Parallelfläche anschließenden, im wesentlichen quaderförmigen, sich in Strömungsrichtung erstreckenden Fortsatz gebildet ist, sowie mit Druckaufnehmern zur Messung der durch die Wirbelablösung entstehenden, der Strömungsgeschwindigkeit proportionalen periodischen Druckschwankungen, d a d u r c h   g e -k e n n z e i c h n e t ,    daß im Innern des prismatischen Teils (3) des Staukörpers (2) zwei sich über dessen wirksame Länge quer zur Strömungsrichtung erstreckende Druckkammern (5, 5') angebracht sind und daß entlang der Winkelkanten (6, 6'), die von den rechtwinklig zur Strömungsrichtung verlaufenden rückwärtigen Teilflächen des prismatischen Teils (3) und den strömungsparallel verlaufenden Flächen des quaderförmigen Fortsatzes (4) gebildet werden, Öffnungen angebracht sind, die druckleitend mit jeweils einer Druckkammer (5, 5') verbunden sind und daß die Druckaufnehmer (7) in oder in hydraulischer Verbindung mit den Druckkammern (5, 5') angeordnet sind.

2. Strömungsmeßeinrichtung nach Anspruch 1,   d a -d u r c h   g e k e n n z e i c h n e t ,    daß die Öffnungen als Schlitze (10, 10') ausgebildet sind, die sich entlang der Winkelkanten (6, 6') oberhalb und unterhalb des Fortsatzes (4) erstrecken und über ihre ganze Länge mit jeweils einer Druckkammer (5, 5') in Verbindung stehen.

3. Strömungsmeßeinrichtung nach Anspruch 1, d a - d u r c h g e k e n n z e i c h n e t , daß die Öff- nungen von jeweils einer Reihe von gleichartigen Bohrungen (9, 9') gebildet werden, die sich entlang der Winkelkanten (6, 6') erstrecken.

4. Strömungsmeßeinrichtung nach Anspruch 1, 2 oder 3, d a d u r c h g e k e n n z e i c h n e t , daß der prismatische Teil (3) einen vorzugsweise zylindrischen Hohlraum (11) aufweist, dessen Achse in der Mittelebene (M - M) des Staukörpers (2) liegt und der durch eine sich in dieser Mittelebene erstreckende Trennwand (12) in zwei gleiche Druckkammern (5, 5') unterteilt ist.

5. Strömungsmeßeinrichtung nach Anspruch 4, d a - d u r c h g e k e n n z e i c h n e t , daß die Trennwand (12) zumindest teilweise als etwa senkrecht zur Trennebene bewegliche Wand (14') ausgebildet ist.

6. Strömungsmeßeinrichtung nach Anspruch 4 oder 5, d a d u r c h g e k e n n z e i c h n e t , daß die Trennwand (12) von einer Stirnfläche des Hohlraums (11) her in diesen einschiebbar und als Träger der Druckauf- nehmer (7) ausgebildet ist.

FIG 1

FIG 2

FIG 3

FIG 4

78 P 3519    1/1

0007111